# EUROPÄISCHE PATENTSCHRIFT

(11) **EP 1 064 157 B1**
(45) Veröffentlichungstag und Bekanntmachung des Hinweises auf die Patenterteilung: **06.03.2002**
(21) Anmeldenummer: 99920551.1
(22) Anmeldetag: 22.03.1999
(51) Int. Cl.: B60B 7/16

(54) **ABSCHLIESSBARE RADKAPPE**
LOCKABLE HUBCAP
ENJOLIVEUR DE ROUE VERROUILLABLE

(30) Priorität: 24.03.1998 DE 19812827
(43) Veröffentlichungstag der Anmeldung: 03.01.2001
(73) Patentinhaber: Alpina Burkard Bovensiepen GmbH & CO., 86807 Buchloe (DE)
(72) Erfinder: WIESINGER, Alois, D-86807 Buchloe (DE)
(74) Vertreter: Helge, Reiner, Dipl.-Ing.
(86) Internationale Anmeldenummer: DE9900845
(87) Internationale Veröffentlichungsnummer: WO9948705

(56) Entgegenhaltungen:
- DE-A- 3 007 911
- DE-A- 3 505 145
- GB-A- 2 050 963
- US-A- 2 453 746
- US-A- 3 833 266
- US-A- 3 995 461

## Beschreibung

Die Erfindung betrifft eine abschließbare Radkappe für eine Kraftfahrzeugfelge zur Abdeckung der im Mittelteil angeordneten Verschraubung mit den Fahrzeugachsen.

Radkappen zur Abdeckung von Achsstumpf und Radmuttern sind hinlänglich bekannt. Die überwiegend bekannten Radkappen werden durch Federsysteme im Mittelteil oder im Randbereich des Felgenbettes gehalten. Die aufgesteckten Radkappen gehen einerseits leicht verloren, andererseits müssen sie zur Demontage von der Felge abgehebelt werden. Dies führt zum Verkratzen sowohl der Felge als auch der Radkappe.

Weitere bekannte Radkappen werden mit der Felge verschraubt. Dazu werden insbesondere Imbusschrauben mit ungerader Kantenzahl und wechselnden Schlüsselweiten verwendet, die einen Diebstahl der Räder erschweren.

Zur Diebstahlsicherung der Fahrzeugräder sind abschließbare Radkappen bekannt.

Aus der DE 35 05 145 A1, die alle Merkmale der Oberbegriffs des Anspruchs 1 offenbart, ist ein Fahrzeugrad bestehend aus Felge, Radscheibe und einer die Radschrauben abdeckenden, mit der Radscheibe durch ein Sicherheitsschloß verbindbare Radkappe bekannt, die in eine Vertiefung der Radscheibe einsetzbar ist. Die Radkappe besteht vorzugsweise aus Aluminium oder gespritztem, elastischem Kunststoff mit einem Sicherheitsschloß und einem dies verdeckenden aufsteckbaren Deckel. Die Radkappe wird am Nabenansatz der Radscheibe eingesetzt und mit einem geeigneten Schlüssel der Schloßriegel des Schlosses derart gedreht, daß der Schloßriegel an der Innenseite des Nabenansatzes anliegt. Anschließend wird der Deckel mit Hilfe einer Lasche in die öffnung der Radkappe eingeklemmt.

Eine weitere bekannte Lösung - DE 30 07 911 A1 - betrifft eine Felge für Kraftfahrzeugräder, insbesondere eine gegossene Leichtmetallfelge, wobei der Felgenteller in seinem zentralen Bereich mit einer die Radschrauben überdeckenden Abdeckkappe versehen ist, die formschlüssig mit dem Felgenteller verbindbar und verschließbar ist. Die Sicherung der Abdeckkappe kann durch eine gesicherte Schraube oder durch einen Schließzylinder, dessen Schließzapfen in eine Bohrung im Felgenteller eingreift, erfolgen.

Die abschließbaren Radkappen dienen zum einen zur Diebstahlsicherung der Fahrzeugräder, insbesondere bei Leichtmetallfelgen, zum anderen zum Schutz der Radmuttern vor Beschädigung, Schmutz und Korrosion. Bei offenliegenden Schließzylindern kann es zu Funktionsbeeinträchtigungen durch Eindringen von Schmutz und Wasser kommen.

Abdeckungen, wie aus der DE 35 05 145 A1 bekannt, sind nur eingeklemmt. Zum Entfernen sind zusätzlich Werkzeuge notwendig. Bei unzureichender Klemmverbindung kann die Abdeckung verloren gehen.

Aufgabe der Erfindung ist es, eine abschließbare Radkappe für Kraftfahrzeugfelgen zu schaffen, die neben der Funktion der Diebstahlsicherung eine leichte Handhabung gewährleistet und in ästhetischer Hinsicht höheren Ansprüchen genügt.

Die Radkappe ist derart auszubilden, daß sie ohne Hilfswerkzeuge rasch und mühelos montiert bzw. demontiert werden kann.

Gelöst wird die Aufgabe durch die im Anspruch 1 angegebenen Erfindungsmerkmale. Weitere vorteilhafte Ausgestaltungen der Erfindung ergeben sich aus den Unteransprüchen.

Die erfindungsgemäße Radkappe wird mittels des Schließzylinders im Nabenbereich der Felge arretiert, wobei die Zentrierung über den Außenbereich der Radkappe in der Vertiefung an der Felge erfolgt. Durch diese Ausbildung wird die Radkappe nach dem Einsetzen und dem Abschließen integraler Bestandteil der Felge.

Neben der Funktion zur Diebstahlsicherung wird auch eine hohe ästhetische Funktion erreicht, da durch den dreh- und kippbaren Emblemträger das Schloß verdeckt wird und durch die versenkte Anordnung von Radkappe und Emblemträger erscheinen Felge und Radkappe nach außen hin als Einheit.

Anhand eines in der Zeichnung dargestellten Ausführungsbeispieles wird die Erfindung näher erläutert.

Es zeigen
- Figur 1 -: die erfindungsgemäße Radkappe
- Figur 2 -: Schnitt durch die Radkappe
- Figur 3 -: Emblemträger

Die Radkappe 1 ist vorzugsweise aus Aluminiumblech geprägt oder aus elastischem Kunststoff hergestellt.

Die Radkappe 1 weist in ihrem Zentrum eine kreisförmige Vertiefung 3 zur Aufnahme des Emblemträgers 2 auf.

In dieser Vertiefung 3 sind der-Schließzylinder 4 und die Bohrung 14 zur Aufnahme des Bolzens 5 angeordnet. Der Emblemträger 2 ist über den Bolzen 5 und der Feder 9 mit der Radkappe 1 verbunden. Die Feder 9 ist als Kegelstumpffeder ausgeführt.

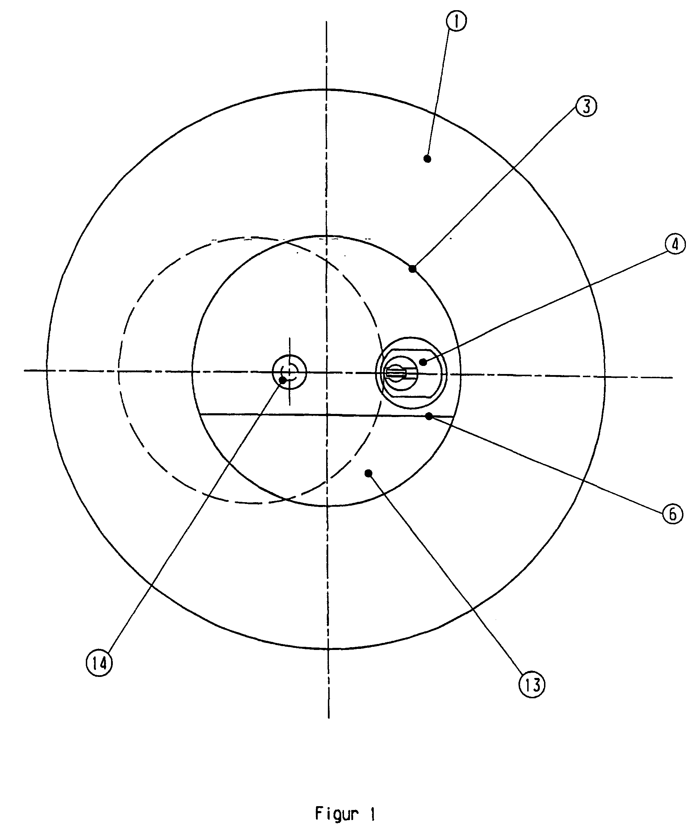

Zur Verbindung des Emblemträgers wird der Bolzen 5 durch die Bohrung 14 geschoben. Auf der Rückseite wird die Feder 9 aufgeschoben und entsprechend gesichert. Dadurch wird der Emblemträger 2 über die Kante 6 kippbar und gleichzeitig um den Mittelpunkt der Bohrung 14 schwenkbar. Die gestrichelte Kreislinie in der Figur 1 zeigt den verschwenkten Emblemträger 2. Der Schließzylinder 4 ist somit zugänglich.

Die Kippkante 6 für den Emblemträger 2 ist auf etwa ein Drittel des Emblem-Durchmessers festgelegt.

Parallel zur Kippkante 6 sind auf der Mittellinie von Radkappe 1 und Emblemträger 2 der Schließzylinder 4 und die Bohrung 14 angeordnet.

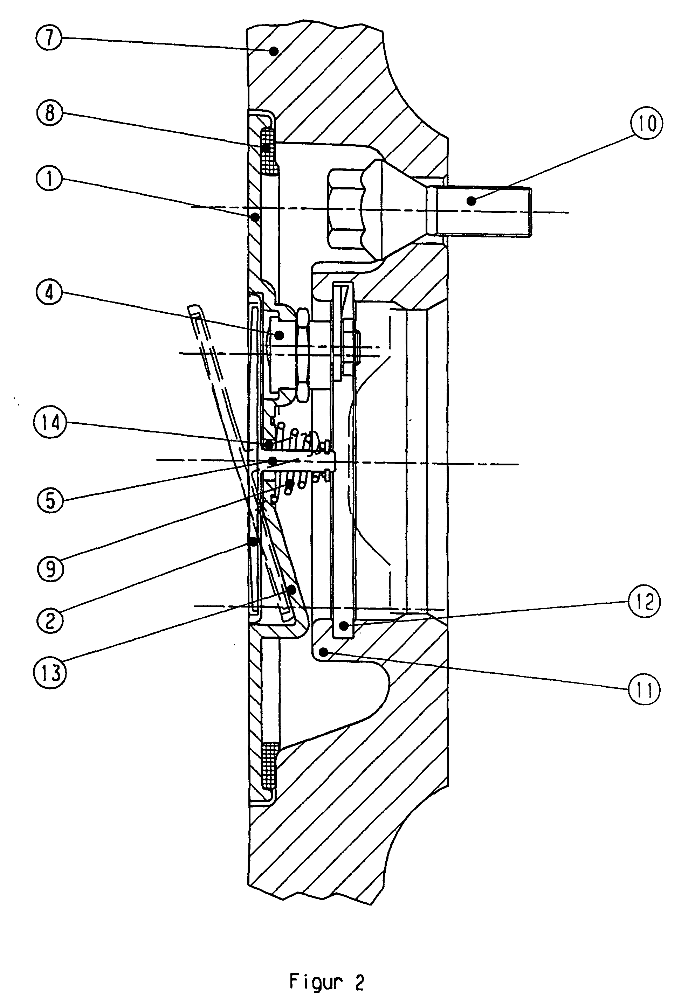

Die Figur 2 zeigt einen Schnitt durch die Felge 7 und der erfindungsgemäßen Radkappe 1. Der über die Kante 6 gekippte Emblemträger 2 ist gestrichelt dargestellt.

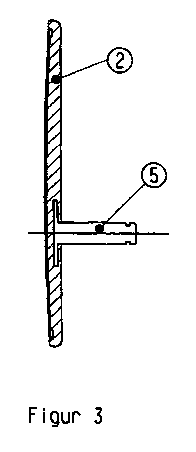

Der Emblemträger - Figur 3 - ist so ausgebildet, daß der äußere Rand das Emblem umfaßt und ist voll in der Radkappe versenkt. Das Emblem kann sowohl eingeklebt als auch eingebördelt sein.

Um Klappergeräusche zu vermeiden, ist auf der Rückseite am Umfang der Radkappe 1 eine Schaumraupe 8 aufgespritzt.

Die Verriegelung erfolgt im Nabenbereich 11 der Felge 7, die Zentrierung der Radkappe 1 im Außenbereich.

Zur Demontage der Radkappe 1 wird auf einen vorgegebenen Punkt des Emblemträgers 2 gedrückt. Dadurch wird der Emblemträger 2 über die Kante 6 in die Vertiefung 13 gekippt. Durch gleichzeitiges Verdrehen gegen den Uhrzeigersinn kann der Emblemträger 2 weggeschwenkt werden. Der Schließzylinder 4 ist somit freigegeben.

Mittels eines Schlüssels wird die Schließzunge des Schließzylinders 4 aus der Nut 12 der Nabe 11 geschwenkt und die Radkappe 1 kann problemlos entfernt werden. Die Montage erfolgt in umgekehrter Reihenfolge.

Nach Entfernen des Schlüssels wird der Emblemträger 2 zurückgeschwenkt und schnappt unterstützt durch die Feder 9 in die kreisrunde Vertiefung 3 der Radkappe 1.

Durch die erfindungsgemäße Ausbildung wird sowohl eine hohe Diebstahlsicherung als auch ein verbesserter Schutz der Radschrauben 10 und des Schließzylinders 4 gegen Verschmutzung erreicht.

## Patentansprüche

1. Abschließbare Radkappe für Kraftfahrzeugfelgen, insbesondere für Leichtmetallfelgen, mit einem Felgenteller, der mit Bohrungen für die Radschrauben bzw. -muttern (10) zur Befestigung der Felge (7) an der Nabe (11) versehen ist, wobei der Felgenteller in seinem zentralen Bereich mit einer die Radkappe (1) aufnehmenden Vertiefung versehen ist,
**dadurch gekennzeichnet, daß**
die Radkappe (1) in ihrem Zentrum eine kreisförmige Vertiefung (3) aufweist, in der ein kipp- und drehbarer federbelasteter Emblemträger (2) angeordnet ist.

2. Abschließbare Radkappe nach Anspruch 1,
**dadurch gekennzeichnet, daß**
der Emblemträger (2) über einen Bolzen (5) und eine Feder (9) mit der Radkappe (1) verbunden ist.

3. Abschließbare Radkappe nach Anspruch 1 und 2,
**dadurch gekennzeichnet, daß**
der Bolzen (5) so angeordnet ist, daß nach der Schwenk- und Drehbewegung des Emblemträgers (2) ein Schließzylinder (4) freigegeben wird und im verschlossenen Zustand die Zuhaltekräfte am Umfang des Emblemträgers (2) ausreichend hoch sind und daß der Schließzylinder (4) so angeordnet ist, daß dieser nach Wegschwenken des Emblemträgers (2) zugänglich ist.

4. Abschließbare Radkappe nach Anspruch 1 bis 3,
**dadurch gekennzeichnet, daß**
eine Bohrung (14) zur Aufnahme des Bolzens (5) des Emblemträgers (2) derart ausgebildet ist, daß neben der Drehbewegung auch eine Kippbewegung erfolgen kann.

5. Abschließbare Radkappe nach Anspruch 1 bis 4,
**dadurch gekennzeichnet, daß**
die Vertiefung (13) in der Radkappe (1) als Kreissegment ausgebildet und etwa 1/3 des Emblemdurchmessers beträgt.

6. Abschließbare Radkappe nach Anspruch 1 bis 5,
**dadurch gekennzeichnet, daß**
auf der der Felge zugewandten Seite der Radkappe (1) eine Schaumraupe (8) aufgespritzt ist.

## Claims

1. Lockable hubcap cover for wheels of motor vehicles, in particular for alloy wheels, with a wheel disk which has holes for wheel bolts or wheel nuts (10) to fasten the wheel (7) to the hub. (11), where the wheel disk, in its central section, has an indentation designed to take up the wheel cover (1),
**characterised in that**
the wheel cover (1), at its centre, has a circular indentation (3), where a tilting, rotary and spring-loaded emblem mount (2) is provided.

2. Lockable hubcap according to claim 1,
**characterised in that**
the emblem mount (2) is connected with the hubcap (1) by a bolt (5) and a spring (9).

3. Lockable hubcap according to claims 1 and 2,
**characterised in that**
the bolt (5) is so arranged that, following a swinging and rotating motion of the emblem mount (2), a locking cylinder (4) is laid bare, and, in closed position, the locking pressure at the circumference of the emblem mount (2) is high enough and that the locking cylinder (4) is so arranged that it can be accessed after the emblem mount (2) has been swung off.

4. Lockable hubcap according to claims 1 through 3,
**characterised in that**
a hole (14) serving to take up the bolt (5) of the emblem mount (2) is designed in a way to permit a tilting motion in addition to rotation.

5. Lockable hubcap according to claims 1 through 4,
**characterised in that**
the indentation (13) in the wheel cover (1) is provided in the shape of a circular segment; having a size of approximately one third of the emblem's diameter.

6. Lockable hubcap according to claims 1 through 5,
**characterised in that**
a foam bead (8) has been sprayed onto the side of the hubcap (1) which faces the wheel.

## Revendications

1. Enjoliveur verrouillable pour des jantes d'automobile, en particulier pour des jantes en métal léger avec un plateau de jante qui est muni d'alésages pour les vis et écrous (10) de roue pour la fixation de la jante (7) sur le moyeu (11), le plateau de jante étant muni dans sa zone centrale d'une cavité logeant l'enjoliveur (1) **caractérisé en ce que**
l'enjoliveur (1) présente en son centre une cavité circulaire (3) dans laquelle est disposé un porte-emblème (2) chargé par ressort, rotatif et pivotant.

2. Enjoliveur verrouillable selon la revendication 1,
**caractérisé en ce que**
le porte-emblème (2) est relié par un écrou (5) et un ressort (9) à l'enjoliveur (1).

3. Enjoliveur verrouillable selon la revendication 1 et 2,
**caractérisé en ce que**
le boulon (5) est disposé de sorte qu'après:le mouvement de rotation et de pivotement du porte-emblème (2) un cylindre de fermeture (4) est libéré et à l'état fermé, les forces de retenue sur la périphérie du porte-emblème (2) sont suffisamment élevées et **en ce que** le cylindre de fermeture (4) est disposé de sorte que celui-ci soit accessible après le pivotement du porte-emblème (2).

4. Enjoliveur verrouillable selon la revendication 1 à 3,
**caractérisé en ce que**
un alésage (14) servant de logement au boulon (5) du porte-emblème (2) est réalisé de sorte qu'outre le mouvement de rotation, il peut s'effectuer également un mouvement de pivotement.

5. Enjoliveur verrouillable selon la revendication 1 à 4,
**caractérisé en ce que**
la cavité (13) est ménagée dans l'enjoliveur (1) comme un segment de cercle et fait approximativement 1/3 du diamètre de l'emblème.

6. Enjoliveur verrouillable selon la revendication 1 à 5,
**caractérisé en ce que**
une moulure cellulaire (8) est moulée sur le côté de l'enjoliveur (1) tourné vers la jante.
